# EUROPÄISCHE PATENTSCHRIFT

(11) **EP 2 153 290 B1**
(45) Veröffentlichungstag und Bekanntmachung des Hinweises auf die Patenterteilung: **07.04.2021**
(21) Anmeldenummer: 08707617.0
(22) Anmeldetag: 08.02.2008
(51) Int. Cl.: G05B 19/19, B25J 9/16, G05B 19/4061

(54) **MASCHINE UND STEUERVORRICHTUNG ZUR BERECHNUNG EINER BAHNKURVE**
MACHINE AND CONTROL DEVICE FOR PRODUCING A TRAJECTORY
MACHINE ET DISPOSITIF DE CONTROL POUR GÉNÉRER UNE TRAJECTOIRE

(30) Priorität: 13.02.2007 DE 102007007602
(43) Veröffentlichungstag der Anmeldung: 17.02.2010
(73) Patentinhaber: SEW-EURODRIVE GmbH & Co. KG, 76646 Bruchsal (DE)
(72) Erfinder: MÜLLER, Markus, 76863 Herxheimweyher (DE)
(86) Internationale Anmeldenummer: PCT/EP2008/000972
(87) Internationale Veröffentlichungsnummer: WO 2008/098707

(56) Entgegenhaltungen:
- EP-A- 0 476 381
- EP-A1- 1 220 069
- US-A- 4 819 184
- US-A- 4 833 383
- US-A- 4 922 430

## Beschreibung

Die Erfindung betrifft ein System bestehend aus einer Maschine zur Bewegung eines bewegbaren Objektes und einer Steuervorrichtung.

Roboter, die als Maschinen mit zwei oder mehr Achsen ausgeführt sind, sind bekannt. Solche Maschinen umfassen auch eine Bahnkurvensteuerung.

**Aus der** EP 1 220 069 A1 **als nächstliegender Stand der Technik ist das Zusammensetzen von Bahnkurven aus Bahnkurvenabschnitten bekannt.**

Der Erfindung liegt daher die Aufgabe zugrunde, ein Objekt möglichst schüttelarm und/oder schnell von einer Start- auf eine Zielposition zu bewegen.

### Erfindungsgemäß wird die Aufgabe mit den in Anspruch 1 angegebenen Merkmalen gelöst.

Wichtige Merkmale der Erfindung bei der Maschine mit zwei oder mehr Achsen, denen jeweils ein Antrieb zugeordnet ist, sind, dass eine Steuervorrichtung mit den Antrieben verbunden ist,
wobei ein von der Maschine bewegbares Objekt vorgesehen ist,
wobei ein von dem Objekt zu überwindendes reales oder virtuelles Hindernis vorgesehen ist,
**wobei** die Steuervorrichtung Mittel zum Bestimmen einer Bahnkurve umfasst, die Mittel zum Bestimmen eines Wurfparabel-Bahnkurvenabschnittes umfassen.

Von Vorteil ist dabei, dass die Bewegung schnell ausführbar ist und durchgehend, also von Anfang bis Ende, begrenzbare Rucke auftreten. Das Objekt bewegt sich auf der Wurfparabel ruckfrei und die Antriebe müssen in diesem Abschnitt der Bewegung im Wesentlichen die Reibung überwinden sowie die Maschinenelemente bewegen, die sich nicht genau entlang der Wurfparabel mit Erdbeschleunigung bewegen. Wenn das Objekt wegen bestimmter Randbedingungen, wie beispielsweise eine besonders niedrige Steighöhe zwischen Start- und Zielposition und/oder Bahngeschwindigkeit Null in Start- und Zielposition und/oder begrenztem zulässigen Ruck, nur entlang einer Wurfparabel in einem Schwerefeld mit Erdbeschleunigung ungleich der Normalschwere g ≈ 9,81 m/s², also einer virtuellen Erdbeschleunigung, als minimaler Wert der vertikalen Bahnbeschleunigung, bewegt wird, bleiben trotzdem die erfindungsgemäßen Vorteile erhalten, insbesondere Schnelligkeit und verringertes Schütteln.

Erfindungsgemäß ist eine erste Achse eine Horizontalachse und eine zweite Achse eine Vertikalachse oder hierzu geneigte Achse. Von Vorteil ist dabei, dass eine einfache Handlingmaschine verwendbar ist.

Erfindungsgemäß umfasst die Bahnkurve, entlang derer das Objekt von der Maschine bewegt wird, einen Wurfparabel-Abschnitt, wobei die Wurfparabel in einem einen gegenüber der Normalschwere reduzierten Beschleunigungswert aufweisenden Schwerefeld bestimmt wird.

Weise ist eine besonders schnelle Bewegung ausführbar.

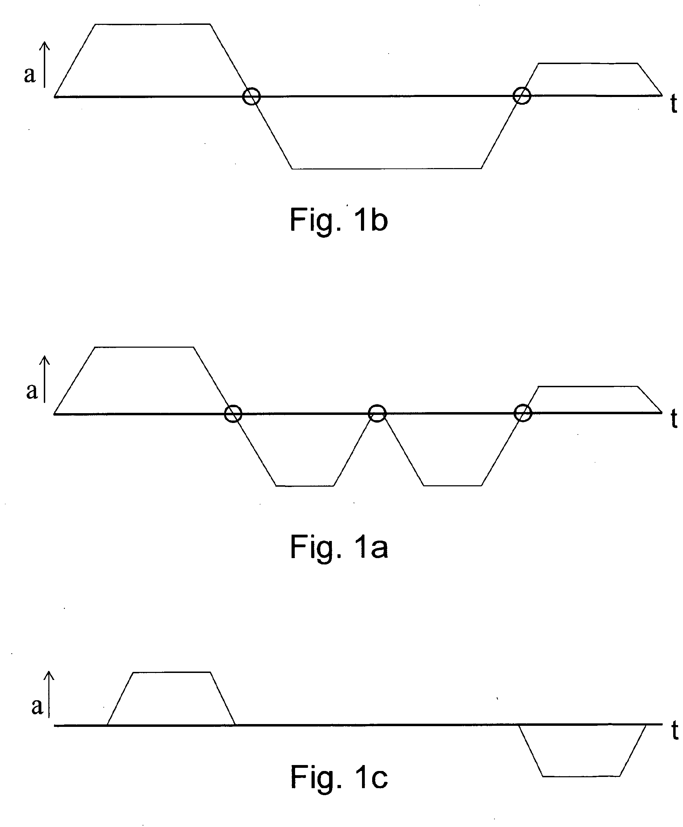

Die Erfindung wird nun anhand von Abbildungen näher erläutert:
Bei der Bahnkurvensteuerung gemäß Figuren 1a und 1c für eine mindestens zwei Achsen aufweisende Maschine wird die vom von der Maschine zu bewegenden Objekt zu durchfahrende Kurve in Geradenabschnitte aufgeteilt. Dabei wird zwischen aufeinander folgenden Geradenabschnitten ein Überschleifen vorgesehen. Hierzu wird ein erster Stützpunkt im Wesentlichen über der Aufnahmeposition und ein zweiter Stützpunkt im Wesentlichen über der Abgabeposition definiert.

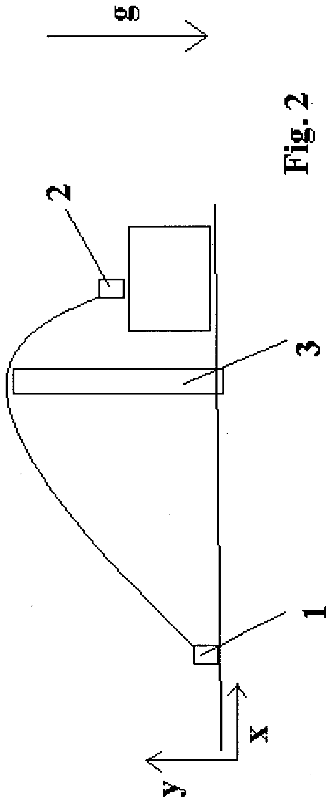

In Figur 2 ist die erfindungsgemäße Bewegung konkret veranschaulicht, wobei die Darstellung nur qualitativ und nicht quantitativ zu den zugehörigen Beschleunigungsverläufen nach den Figuren 1b und 1c ausgeführt ist. Dabei ist mit Bezugszeichen 1 das Objekt in Aufnahmeposition als Startposition gezeigt, mit Bezugszeichen 2 das Objekt in Abgabeposition als Zielposition und mit Bezugszeichen 3 ist ein eine Steighöhe erzwingendes Hindernis dargestellt.

Jeder Achse ist ein Antrieb zugeordnet. Hierzu sind vorteilhaft von einem Umrichter versorgte Synchronmotoren verwendet. Alternativ sind auch andere Motoren, wie beispielsweise Asynchronmotoren, oder andere Servomotoren verwendbar.

Im Folgenden wird der Einfachheit halber auf eine Maschine Bezug genommen, die eine Vertikalachse y und eine Horizontalachse x aufweist, so dass eine zweidimensionale Bewegung des Objektes ausführbar ist. Die Erfindung ist jedoch in analoger Weise auf mehrachsige Maschinen und komplexe Kinematiken übertragbar.

In der Figur 1a ist für eine mindestens zweiachsige Maschine der zeitliche Verlauf einer Vertikalbeschleunigung gezeigt für einen ersten Geradenabschnitt, also in x-Richtung. Die gezeigte Beschleunigung umfasst auch die Wirkung der Erdbeschleunigung g in y-Richtung.

In der Figur 1c ist ein zughöriger zeitlicher Verlauf einer Horizontalbeschleunigung gezeigt.

In der Figur 1b ist für die mindestens zweiachsige Maschine der erfindungsgemäße zeitliche Verlauf einer resultierenden auf das Objekt wirkenden Vertikalbeschleunigung gezeigt.

In Figur 1a ist gezeigt, dass für den Geradenabschnitt die Beschleunigung von Null ausgehend bei begrenztem Ruck erhöht wird in Aufwärtsrichtung bis zu einem Maximalwert. Dann wird die Beschleunigung abgesenkt bis zum ersten Nulldurchgang und in Abwärtsrichtung aufgebaut. Der Minimalwert kann dabei beispielsweise die Erdbeschleunigung sein oder ein Wert der um einen derartigen Betrag über der Erdbeschleunigung liegt, dass Reibungsverluste überwindbar sind, aber das zu bewegende Objekt nur eine geringe oder gar keine von der Erdbeschleunigung verschiedene zusätzliche Beschleunigung erfährt. In diesem Sinne und so lange der Beschleunigungsverlauf auf dem minimalen Wert konstant gehalten wird, also insbesondere während des Plateaus nach Figur 1a mit Minimalbeschleunigungswert, bewegt sich das Objekt also auf einer Wurfparabel.

Danach wird wieder auf Null abgesenkt, also zumindest auch eine zusätzliche über die Erdbeschleunigung hinausgehende Beschleunigung auf das Objekt bewirkt, und nach einer kurzen Zeitspanne wiederum von Null ausgehend in Abwärtsrichtung beschleunigt. Auch diese dritte Beschleunigungsphase wird mit einem Nulldurchgang beendet, dem eine positive aufwärtsgerichtete Beschleunigungsphase folgt, also ein Abbremsvorgang auf die Zielposition hin.

Insgesamt wird also dreimal der Nullwert erreicht, insbesondere durchschritten.

In Figur 1c ist für die Horizontalbewegung eine anfängliche Beschleunigungsphase gezeigt, die dann gefolgt ist von einer langen Phase mit verschwindender Beschleunigung, also konstanter Geschwindigkeit. In dieser Phase ist allerdings zumindest eine derartig hohe Kraft der Antriebe vorgesehen, dass die Reibungskräfte und - momente der Antriebe der Maschine kompensiert sind. Schließlich erfolgt eine Bremsbeschleunigungsphase am Ende.

In Figur 1b ist der erfindungsgemäße vertikale Beschleunigungsverlauf dargestellt. Dabei wird möglichst wenig Zeit verbraucht für die Vertikalbewegung. Hierzu wird in einer ersten Beschleunigungsphase wiederum für den Geradenabschnitt die Beschleunigung von Null ausgehend bei begrenztem Ruck erhöht in Aufwärtsrichtung bis zu einem Maximalwert. Dann wird die Beschleunigung abgesenkt bis zum ersten Nulldurchgang und in Abwärtsrichtung aufgebaut zum nach unten gerichteten Beschleunigen. Dies bewirkt ein Abbremsen der Aufwärtsbewegung und/oder eine Beschleunigung nach unten. Schließlich wird zum Abbremsen der Abwärtsbewegung eine aufwärtsgerichtete Beschleunigung aufgebaut.

Somit ist bei dem Verlauf nach Figur 1b nur zweimal die Null erreicht. Diese Begrenzung auf zwei Nulldurchgänge macht eine besonders schnelle Vertikalbewegung zum Überwinden eines realen oder virtuellen Hindernisses möglich. Es wird also ein Zeitoptimum bei begrenztem Ruck erreicht für die gesamte Strecke von der Aufnahmeposition über die Scheitelhöhe bis zur Abgabeposition.

Außerdem ist ein möglichst geringes Schütteln der Objekte erreicht, da nur zwei Nulldurchgänge und somit Richtungswechsel der Beschleunigung in vertikaler Richtung auftreten.

Diese **Bahnkurvenführung** ermöglicht außerdem, dass im Scheitelpunkt der Bahnkurve und dessen Umgebung in vertikaler Richtung eine konstante, nach unten gerichtete Beschleunigung erreichbar ist. Je näher diese konstante Beschleunigung bei dem Wert der am Aufstellungsort der Maschine wirkenden realen Erdbeschleunigung liegt, desto weniger Kraft muss die Maschine in diesem Bereich der Bahnkurve zum Führen des Handling-Objektes aufwenden. Wird die Erdbeschleunigung erreicht und führt die Maschine in dem Bereich eine Bewegung mit konstanter Bahngeschwindigkeit in horizontaler Richtung aus, bewegt sich das Handling-Objekt auf einer Wurfparabel.

Vorteilig ist die Möglichkeit der Bahnführung mit sehr wenig Kraft besonders bei Maschinen, deren Kinematik und Antriebe im oberen Bereich der Bahnkurve konstruktionsbedingt nur sehr geringe Kräfte aufbringen können oder leicht ins Schwingen geraten können.

Der Erfindungsvorteil des Zeitoptimums wird solange nicht geschmälert, so lange die Horizontalbewegung von der Start- zur Zielposition während der erforderlichen Zeit zur Ausführung der Vertikalbewegung innerhalb der vorgegebenen Dynamikgrenzen ausführbar ist.

Die zeitoptimierte Bahnkurve ist mittels eines Funktionsbausteins, insbesondere in IEC 61131-3, implementierbar. Alternativ ist sie auch in einem speziellen Modul konfigurierbar und parametrierbar.

Wichtig ist bei der Erfindung, dass der Beschleunigungsverlauf nur wenige, insbesondere nur einen einzigen Zeitabschnitt zwischen Startposition und Zielposition umfasst, in welchem die Beschleunigung konstant bei einem Minimalwert ist. Anders ausgedrückt, bewegt sich das Objekt während dieser Zeitabschnitte im Wesentlichen auf einer Wurfparabel oder einer Kurve oder Parabel bei reduzierter virtueller Erdbeschleunigung, wie oben erläutert.

Besonders schnell ist das Objekt bewegbar von Start zum Ziel, wenn eine einzige Wurfparabel zur Überwindung des Hindernisses, also der durch das Hindernis definierten Steighöhe, verwendet wird. Außerdem ist die Bewegung in diesem Zeitabschnitt äußerst ruckfrei oder zumindest ruckbegrenzt ausführbar. Die Antriebe müssen in diesem Zeitabschnitt bei vorteilhafter Auslegung nur die zur Überwindung der Reibung notwendigen Beschleunigungen aufbringen.

Bei einem vorteilhaften Ausführungsbeispiel geht diesem Abschnitt genau ein Abschnitt zum Erreichen der Bahngeschwindigkeit für den Übergang auf die Wurfparabel voraus und folgt genau ein Abschnitt zum Abbremsen des Objekts für das Erreichen der Zielposition mit gewünschter Bahngeschwindigkeit.

Bei weiteren erfindungsgemäßen Ausführungsbeispielen werden statt den in Figur 2 gezeigten Linearachsen auch rotatorische verwendet. Beispielsweise ist x dann eine Drehachse und y weiterhin eine Vertikalachse.

Statt der Ausrichtung der y-Achse in Vertikalrichtung sind auch gegen die Erdbeschleunigungsrichtung einen Winkel aufweisende Vertikalachsen verwendbar. In diesem Fall wird die Erdbeschleunigung durch eine der entsprechenden Hangabtriebskraft zugeordnete Beschleunigung ersetzt.

Erfindungsgemäß wird der Abschnitt mit dem minimalen Wert an Beschleunigung nicht derart ausgeführt, dass auf das Objekt nur die Normalschwere der Erdbeschleunigung, deren Wert ungefähr -9,81 m/s^2 beträgt, wirkt, sondern es wird nur ein viel größerer Wert, wie beispielsweise -2 m/s^2 oder -4 m/s^2 als virtuelle Erdbeschleunigung für die Wurfparabel erreicht und vorgesehen. Auch schon bei solchen Werten ist die Erfindung vorteilhaft. Sie ist des Weiteren auch vorteilhaft, wenn die Normalschwere unterschritten wird, also beispielsweise bei einem Wert der virtuellen Erdbeschleunigung von -11m/s^2 oder tiefer.

Bei weiteren Ausführungsbeispielen, die nicht Teil der Erfindung sind, sind die Beschleunigungsverläufe im Gegensatz zu den in den Figuren 1a, 1b, 1c gezeigten Verläufen nicht trapezförmig ausgeführt, sondern beispielsweise mit sinusförmigen, polynomialen oder anderen Übergängen.

Bei weiteren Ausführungsbeispielen, die nicht Teil der Erfindung sind, können die Beschleunigungsverläufe in horizontaler Richtung gegenüber der Darstellung in Figur 1c auch zeitlich deutlich versetzt sein, so dass sich beispielsweise geneigte Geraden als Bahnkurvenabschnitte in Start- und/oder Zielpunkt ergeben.

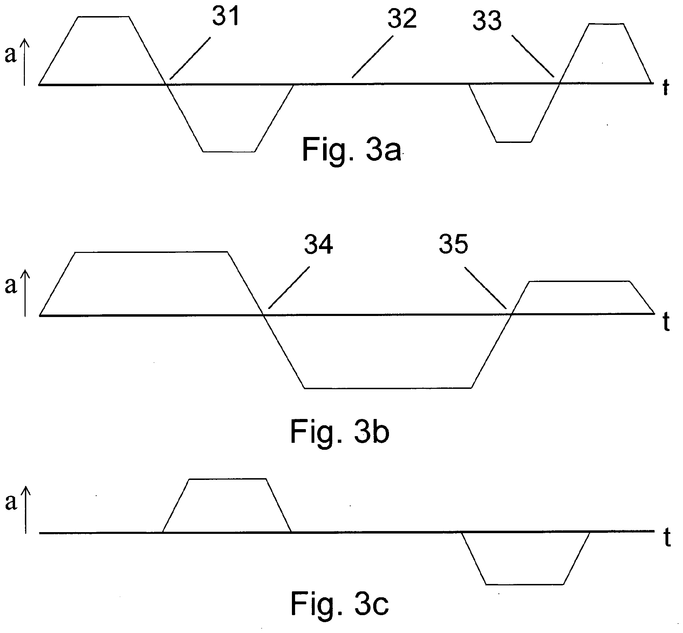

Mittels der Figuren 3a, 3b und 3c sind weitere Ausführungsformen veranschaulicht.

Bei der Bahnkurvensteuerung gemäß Figuren 3a und 3c für eine mindestens zwei Achsen aufweisende Maschine wird die vom von der Maschine zu bewegenden Objekt zu durchfahrende Kurve in Geradenabschnitte aufgeteilt. Dabei wird zwischen aufeinander folgenden Geradenabschnitten ein Überschleifen vorgesehen. Hierzu wird ein erster Stützpunkt genau oder etwas versetzt über der Aufnahmeposition und ein zweiter Stützpunkt genau oder etwas versetzt über der Abgabeposition definiert.

In Figur 3a ist gezeigt, dass für den Geradenabschnitt die in vertikaler Richtung resultierende auf das Objekt wirkende Beschleunigung von Null ausgehend bei begrenztem Ruck erhöht wird in Aufwärtsrichtung bis zu einem Maximalwert. Dann wird die Beschleunigung abgesenkt bis zum ersten Nulldurchgang 31 und in Abwärtsrichtung aufgebaut.

Danach wird wieder auf Null abgesenkt 32. Nach einer kurzen Zeitspanne, während der das Objekt entlang einer Geraden bewegt wird, wird wiederum von Null ausgehend in Abwärtsrichtung beschleunigt. Auch diese dritte Beschleunigungsphase wird mit einem Nulldurchgang 33 beendet, dem eine positive aufwärtsgerichtete Beschleunigungsphase folgt, also ein Abbremsvorgang auf die Zielposition hin.

Insgesamt erreicht, insbesondere durchschreitet die resultierende auf das Objekt in vertikaler Richtung wirkende Beschleunigung also dreimal den Nullwert.

In der Figur 3c ist ein zugehöriger zeitlicher Verlauf einer auf das Objekt wirkenden Horizontalbeschleunigung gezeigt. Eine Beschleunigungsphase wird gefolgt von einer langen Phase mit verschwindender Beschleunigung, also konstanter Geschwindigkeit. In dieser Phase ist allerdings zumindest eine derartig hohe Kraft vorgesehen, dass die Reibungskräfte und - momente der Antriebe der Maschine kompensiert sind. Schließlich erfolgt eine Bremsbeschleunigungsphase.

In der Figur 3b ist für die mindestens zweiachsige Maschine der erfindungsgemäße zeitliche Verlauf einer resultierenden auf das Objekt wirkenden Vertikalbeschleunigung gezeigt. Dabei wird möglichst wenig Zeit verbraucht für die Vertikalbewegung. Hierzu wird in einer ersten Beschleunigungsphase wiederum für den Geradenabschnitt die Beschleunigung von Null ausgehend bei begrenztem Ruck erhöht in Aufwärtsrichtung bis zu einem Maximalwert. Dann wird die Beschleunigung abgesenkt bis zum ersten Nulldurchgang (34) und in Abwärtsrichtung aufgebaut zum Abbremsen. Schließlich wird nach Überschreiten des Scheitels der Bahnkurve zum Abbremsen der Abwärtsbewegung eine aufwärtsgerichtete Beschleunigung aufgebaut, wobei ein zweiter Nulldurchgang erfolgt (35).

### Bezugszeichenliste

t Zeit
g Erdbeschleunigung
a Resultierende auf das Objekt wirkende Beschleunigung in einer Richtung
1 Objekt in Aufnahmeposition als Startposition
2 Objekt in Abgabeposition als Zielposition
3 Steighöhe erzwingendes Hindernis
31 erster Nulldurchgang
32 zweiter Nulldurchgang
33 dritter Nulldurchgang
34 erster Nulldurchgang des erfindungsgemäßen Beschleunigungsverlaufs in vertikaler Richtung
35 zweiter Nulldurchgang des erfindungsgemäßen Beschleunigungsverlaufs in vertikaler Richtung

## Patentansprüche

1. System, umfassend eine **Maschine zur Bewegung eines bewegbaren Objektes und** eine **Steuervorrichtung,**
**wobei die Maschine** mit zwei oder mehr Achsen **ausgebildet ist,** denen jeweils ein Antrieb zugeordnet ist,
wobei **die** Steuervorrichtung mit den Antrieben verbunden ist,
**wobei die Maschine zur Bewegung des von der Maschine bewegbaren Objektes geeignet ausgeführt ist, so dass das Objekt von der Maschine entlang einer Bahnkurve geführt wird, die ein reales oder virtuelles Hindernis überwindet,**
**wobei** die Steuervorrichtung Mittel zum Bestimmen der Bahnkurve umfasst, die Mittel zum Bestimmen eines Wurfparabel-Bahnkurvenabschnittes **einer Wurfparabel** umfassen,
**welche geeignet ausgeführt sind, die Wurfparabel in einem einen gegenüber der Normalschwere reduzierten Beschleunigungswert aufweisenden Schwerefeld zu bestimmen,**
**wobei** eine erste Achse eine Horizontalachse und eine zweite Achse eine Vertikalachse ist.

## Claims

1. System, comprising a machine for moving a movable object and comprising a control device,
wherein the machine is designed with two or more axes, a drive being assigned to each axis,
wherein the control device is connected to the drives,
wherein the machine for moving the object that is movable by the machine is suitably designed such that the object is guided by the machine along a trajectory that overcomes a real or virtual obstacle,
wherein the control device comprises means for determining the trajectory, which comprise means for determining a ballistic parabola trajectory section of a ballistic parabola,
which are suitably designed to determine the ballistic parabola in a gravitational field that has a reduced acceleration value compared to normal gravity,
wherein a first axis is a horizontal axis and a second axis is a vertical axis.

## Revendications

1. Système muni d'une machine conçue pour mouvoir un objet mobile, et d'un dispositif de commande,
la machine étant dotée d'axes au nombre de deux ou plus, à chacun desquels un entraînement est respectivement affecté,
le dispositif de commande étant relié aux entraînements,
la machine étant conçue pour être appropriée à la mise en mouvement de l'objet pouvant être mû par ladite machine, de telle sorte que ledit objet soit guidé, par ladite machine, le long d'une trajectoire surmontant un obstacle réel ou virtuel,
le dispositif de commande comprenant des moyens dévolus à la détermination de ladite trajectoire, qui incluent des moyens de détermination d'un segment de trajectoire d'une parabole de lancement
conçus pour se prêter à la détermination de ladite parabole de lancement dans un champ gravitationnel présentant une valeur d'accélération réduite par rapport à la gravité normale,
un premier axe étant un axe horizontal, et un second axe étant un axe vertical.
